# EUROPÄISCHE PATENTANMELDUNG

(11) **EP 1 138 707 A1**
(43) Veröffentlichungstag der Anmeldung: **04.10.2001**
(21) Anmeldenummer: 01102471.8
(22) Anmeldetag: 03.02.2001
(51) Int. Cl.: C08G 18/10, C08G 18/48, C08G 18/75

(54) **Monomerarme NCO-haltige Prepolymere auf der Basis von 1,4-Diisocyanato-2,2,6-trimethylcyclohexan, ein Verfahren zu deren Herstellung, sowie Verwendung**

(30) Priorität: 30.03.2000 DE 10015891
(71) Anmelder: Degussa AG, 40474 Düsseldorf (DE)
(72) Erfinder: Spyrou, Emmanouil, Dr., 45772 Marl (DE)

(57) **Zusammenfassung**

Monomerarme NCO-haltige Prepolymere auf der Basis von 1,4-Diisocyanato-2,2,6-trimethylcyclohexan, ein Verfahren zu deren Herstellung, sowie Verwendung.

## Beschreibung

Die Erfindung betrifft monomerarme NCO-haltige Prepolymere auf der Basis von 1,4-Diisocyanato-2,2,6-trimethylcyclohexan (TMCDI), ein Verfahren zu deren Herstellung, sowie Verwendung.

Aliphatische und cycloaliphatische Diisocyanate finden in hochwertigen licht- und wetterstabilen Polyurethanbeschichtungen breite Anwendung. Für viele Anwendungen, so z. B. die Prepolymerbildung, ist es dabei von Vorteil, wenn die beiden Isocyanatgruppen unterschiedliche Reaktivitäten aufweisen. Der Anteil an unerwünschten Monomeren wird durch diese sogenannte Selektivität zurückgedrängt, die entstehenden Produkte weisen niedrigere Viskositäten und bessere technische Verarbeitbarkeit auf.

Hexamethylendiisocyanat (HDI) weist keinerlei Selektivität auf, die entsprechenden NCO-haltigen Prepolymere haben daher einen hohen Anteil an unerwünschten toxikologisch bedenklichen Monomeren. Isophorondiisocyanat (IPDI) ist aufgrund der unterschiedlichen sterischen Umgebung der beiden Isocyanatgruppen dagegen selektiv, die Prepolymerisierung führt bei gleichen Verhältnissen zu geringeren Monomergehalten. In beiden Fällen kann der Monomergehalt durch eine technisch aufwendige Kurzwegdestillation gesenkt werden.

Aufgabe war es NCO-haltige Prepolymere mit einem sehr niedrigen Monomergehalt zu finden, die außerdem ohne ein Destillationsverfahren zwecks Entfernung der Monomere direkt einsetzbar sein sollten.

Überraschend wurde gefunden, daß 1,4-Diisocyanato-2,2,6-trimethylcyclohexan (TMCDI), ein einfach zugängliches cycloaliphatisches Diisocyanat (J. Appl. Polym. Sci. 1994, *54(2)*, 207-218; EP 0945427 A1), sich im besonderen Maße für den Einsatz in NCO-haltigen Prepolymeren eignet. Der Monomergehalt ist, ohne jede aufwendige Kurzwegdestillation, deutlich niedriger als bei Prepolymeren auf der Basis IPDI.

Gegenstand der Erfindung sind monomerarme NCO-haltige Prepolymere auf der Basis von 1,4-Düsocyanato-2,2,6-trimethylcyclohexan (TMCDI) und Polyolen mit einem Gehalt an Restmonomeren von kleiner 1,0 Gew.-%, erhältlich durch Umsetzung von 1,4-Diisocyanato-2,2,6-trimethylcyclohexan (TMCDI) und mindestens einem mindestens difunktionellen Polyol im NCO/OH-Verhältnis von 2-1,5 zu 1 in Gegenwart mindestens eines Katalysators bei 20-100 °C.

Ebenfalls Gegenstand der Erfindung ist ein Verfahren zur Herstellung von NCO-haltigen Prepolymeren auf der Basis von TMCDI und Polyolen mit einem Gehalt an Restmonomeren von kleiner 1,0 Gew.-%, durch Umsetzung von TMCDI und mindestens einem Polyol im NCO/OH-Verhältnis von 2-1,5 zu 1 in Gegenwart mindestens eines Katalysators bei 20-100 °C.

Für die Herstellung der erfindungsgemäßen monomerarmen NCO-haltigen Prepolymeren wird TMCDI, eventuell im Gemisch mit anderen aliphatischen oder cycloaliphatischen Diisocyanaten, vorgelegt und ein mindestens difunktionelles Polyol dazugegeben. Das NCO/OH Verhältnis liegt dabei zwischen 2:1 und 1,5:1. Im Regelfall findet die Umsetzung in Anwesenheit eines Katalysators bei 20-100 °C statt. Zusätzlich zu den polymeren Polyolen lassen sich auch Kettenverlängerer einsetzen, wie z.B. niedermolekulare mehrwertige Alkohole oder Aminoalkohole. Der Monomergehalt des so hergestellten Prepolymers liegt unter 1,0 Gew.-%, meist unter 0,5 Gew.-% und bedarf daher nicht der Kennzeichnung "Gesundheitsschädlich".

Diisocyanate, die sich zur Abmischung mit TMCDI eignen, sind beispielsweise Hexamethylendiisocyanat (HDI), Isophorondiisocyanat (IPDI), 4,4'-Methylen-bis(cyclohexylisocyanat) (HMDI), 2-Methylpentan-methylen-1,5-diisocyanat (MPDI), Trimethylhexamethylen-1,6-diisocyanat (TMDI), oder *m*-Tetramethylxylylendiisocyanat (TMXDI).

Als Polyole werden bevorzugt Polyester, Polyether, Polyacrylate Polycaprolactone, Polycarbonate oder Polyurethane oder Mischungen derselben mit einer bevorzugten OH-Funktionalität von 2-6 zur Herstellung der erfindungsgemäßen Prepolymere eingesetzt.

Katalysatoren, die für die Umsetzung geeignet sind, sind handelsüblich und basieren im Regelfall auf Metall- oder Übergangsmetallverbindungen auf Basis von Aluminium, Zinn, Zink, Titan, Mangan, Bismut, oder Zirkonium, wie z.B. Dibutylzinndilaurat, Zinkoctoat, Titantetrabutylat oder Zirkoniumoctoat, oder aber auch tertiäre Amine wie z.B. 1,4-Diazabicyclo-[2.2.2]-octan.

Die erfindungsgemäßen Präpolymeren können auch Kettenverlängerer enthalten, wie z. B. niedermolekulare mehrwertige Alkohole oder Aminoalkohole.

Außerdem können die erfindungsgemäßen NCO-haltigen Prepolymere auch mit herkömmlichen Blockierungsmitteln wie z. B. Methylethylketoxim, ε-Caprolactam, Malonsäuredietylester, Acetessigsäureethylester, 1,2,4-Triazol, 3,5-Dimethylpyrazol, Diisopropylamin blockiert werden und in wärmehärtenden 1-K-Formulierungen eingesetzt werden.

Gegenstand der Erfindung ist auch ein Verfahren zur Herstellung von NCO-haltigen Prepolymeren auf der Basis von TMCDI und Polyolen mit einem Gehalt an Restmonomeren von kleiner 1,0 Gew.-%, durch Umsetzung von TMCDI und mindestens einem mindestens difunktionellen Polyol im NCO/OH-Verhältnis von 2-1,5 zu 1 in Gegenwart mindestens eines Katalysators bei 20-100 °C.

Gegenstand der Erfindung ist auch die Verwendung der Prepolymeren in feuchtigkeitshärtenden Lacksystemen.

Die erfindungsgemäßen monomerarmen NCO-haltigen Prepolymere können bei Raumtemperatur mit Feuchtigkeit ausgehärtet werden, entweder direkt oder zur Steigerung der Reaktionsgeschwindigkeit unter Zugabe von Polyketiminen oder Oxazolidinen.

Zur Beschleunigung der Aushärtung ist der Einsatz der in der Isocyanatchemie bekannten Katalysatoren möglich, z. B. tert. Amine, wie 1,4-Diazabicyclo-[2.2.2]-octan, Triethylamin usw. und/oder Metallsalze wie Zinkchlorid, Dibutylzinndilaurat, usw.

### Das folgende Beispiel soll die Erfindung erläutern aber nicht einschränken:

### Herstellung eines NCO-terminierten Prepolymers auf Basis TMCDI

281 g (1,35 Mol) 1,4-Diisocyanato-2,2,6-trimethylcyclohexan und 0,1 g DBTL wurden vorgelegt und auf 40°C aufgeheizt. Bei dieser Temperatur ließ man unter Rühren und Schutzgas 719 g eines Polytetramethylenglycols (TERATHANE 1000, OHZ: 116, Du Pont) zutropfen (NCO/OH = 1,8:1). Drei Stunden nach Zutropfen betrug der NCO-Gehalt 5,03% (Th.: 5,04%). Die Viskosität lag bei 15 Pas, der Monomergehalt bei 0,13 Gew.-% (GC).

### Nicht erfindungsgemäßes Vergleichsbeispiel:

### Herstellung eines NCO-terminierten Prepolymers auf Basis IPDI

294 g (1,32 Mol) Isophorondiisocyanat (VESTANAT IPDI, Degussa-Hüls AG) und 0,1 g DBTL wurden vorgelegt und auf 40 °C aufgeheizt. Bei dieser Temperatur ließ man unter Rühren und Schutzgas 706 g eines Polytetramethylenglycols (TERATHANE 1000, OHZ: 116, Du Pont) zutropfen (NCO/OH = 1,8:1). Drei Stunden nach Zutropfen betrug der NCO-Gehalt 4,70% (Th.: 4,90 %). Die Viskosität lag bei 33 Pas, der Monomergehalt bei 2,3 Gew.-% (GC).

## Patentansprüche

1. Monomerarme NCO-haltige Prepolymere auf der Basis von 1,4-Diisocyanato-2,2,6-trimethylcyclohexan (TMCDI) und Polyolen mit einem Gehalt an Restmonomeren von kleiner 1,0 Gew.-%, erhältlich durch Umsetzung von 1,4-Diisocyanato-2,2,6-trimethylcyclohexan (TMCDI) und mindestens einem mindestens difunktionellen Polyol im NCO/OH-Verhältnis von 2-1,5 zu 1 in Gegenwart mindestens eines Katalysators bei 20-100 °C.

2. Monomerarme NCO-haltige Prepolymere nach Anspruch 1, mit einem Gehalt an Restmonomeren von kleiner 0,5 Gew.-%.

3. Monomerarme NCO-haltige Prepolymere nach Anspruch 1 oder 2,
**dadurch gekennzeichnet,**
**dass** TMCDI allein oder in Mischungen mit IPDI, HDI, TMDI, TMXDI oder HMDI enthalten ist.

4. Monomerarme NCO-haltige Prepolymere nach mindestens einem der Ansprüche 1 bis 3,
**dadurch gekennzeichnet,**
**dass** als Polyole Polyester, Polyether, Polycaprolactone, Polyacrylate, Polycarbonate oder Polyurethane allein oder in Mischungen enthalten sind.

5. Monomerarme NCO-haltige Prepolymere nach mindestens einem der Ansprüche 1 bis 4,
**dadurch gekennzeichnet,**
**dass** als Katalysatoren tertiäre Amine oder Metall- bzw. Übergangsmetallverbindungen auf Basis von Aluminium, Zinn, Zink, Titan, Mangan, Bismut, oder Zirkonium eingesetzt werden.

6. Monomerarme NCO-haltige Prepolymere nach mindestens einem der Ansprüche 1 bis 5,
**dadurch gekennzeichnet,**
**dass** als Katalysatoren Dibutylzinndilaurat, Zinkoctoat, Titantetrabutylat, Zirkoniumoctoat und/oder 1,4-Diazabicyclo-[2.2.2]-octan eingesetzt werden.

7. Monomerarme NCO-haltige Prepolymere nach mindestens einem der Ansprüche 1 bis 6,
**dadurch gekennzeichnet,**
**dass** die Prepolymeren Kettenverlängerer enthalten.

8. Monomerarme NCO-haltige Prepolymere nach Anspruch 7,
**dadurch gekennzeichnet,**
**dass** als Kettenverlängerer niedermolekulare mehrwertige Alkohole oder Aminoalkohole enthalten sind.

9. Monomerarme NCO-haltige Prepolymere nach mindestens einem der Ansprüche 1 bis 8,
**dadurch gekennzeichnet,**
**dass** die Prepolymeren blockiert sind.

10. Monomerarme NCO-haltige Prepolymere nach Anspruch 9,
**dadurch gekennzeichnet,**
**dass** als Blockierungsmittel MEK-Oxim, ε-Caprolactam, Malonsäuredietylester, Acetessigsäureethylester, 1,2,4-Triazol, 3,5-Dimethylpyrazol oder Düsopropylamin enthalten sind.

11. Verfahren zur Herstellung von NCO-haltigen Prepolymeren auf der Basis von TMCDI und Polyolen mit einem Gehalt an Restmonomeren von kleiner 1,0 Gew.-%, durch Umsetzung von TMCDI und mindestens einem mindestens difunktionellen Polyol im NCO/OH-Verhältnis von 2-1,5 zu 1 in Gegenwart mindestens eines Katalysators bei 20-100 °C.

12. Verwendung der Prepolymeren nach mindestens einem der Ansprüche 1 bis 10, in feuchtigkeitshärtenden Lacksystemen.
